(19) Europäisches Patentamt
European Patent Office
Office européen des brevets

(11) EP 4 783 068 A1

(12) EUROPEAN PATENT APPLICATION

(43) Date of publication:
29.07.2026 Bulletin 2026/31

(51) International Patent Classification (IPC):
G06N 3/0455 (2023.01)   G06N 5/045 (2023.01)
G06N 20/20 (2019.01)   G05B 23/02 (2006.01)

(21) Application number: 25153760.1

(22) Date of filing: 24.01.2025

(52) Cooperative Patent Classification (CPC):
G06N 5/045; G06N 3/0455; G06N 20/20;
G05B 23/024; G05B 23/0281

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Hitachi Energy Ltd
8050 Zürich (CH)

(72) Inventor: NAIDU, Sarala Mohan
79130 Falun (SE)

(74) Representative: AWA Sweden AB
Matrosgatan 1
Box 5117
200 71 Malmö (SE)

(54) **METHOD AND SYSTEM FOR GENERATING TECHNICAL EXPLANATIONS OF ALARMS IN A SCADA SYSTEM**

(57) According to an aspect of the present inventive concept there is provided a computer-implemented method (1000) for generating technical explanations of alarms in a supervisory control and data acquisition, SCADA, system for an electrical infrastructure, the method (1000) comprising: providing (1100) a neural network, NN, model trained to detect anomalies in data, wherein the NN model is trained on a training dataset comprising training data based on operational data retrieved by the SCADA system from the electrical infrastructure and comprising data related to a plurality of system parameters of the SCADA system, receiving (1200) run data based on operational data retrieved by the SCADA system from the electrical infrastructure, the run data comprising data related to the plurality of system parameters, detecting (1300), with the NN model, an anomaly in the run data, and generating (1400) a technical explanation of the detected anomaly by means of an interpretability model, wherein the interpretability model applies a model-agnostic interpretable technique to the run data to determine a contribution of the system parameters in the plurality of system parameters to the detection of the anomaly.

Figure 4

EP 4 783 068 A1

**Description**

Technical field

The present inventive concept relates to the field of SCADA systems. More specifically, the present inventive concept relates to generation of technical explanations of alarms in SCADA systems.

Background

Supervisory Control and Data Acquisition (SCADA) systems are widely used in industrial and infrastructure applications to monitor and control processes. When acquired data deviates from predefined thresholds, alarms may be generated. Such alarms are conventionally displayed on a Human-Machine Interface (HMI) to inform operators of SCADA systems of occurrences that require attention. These alarms may be triggered based on preprogrammed rules within the SCADA system, and information related to the alarms are conveyed through short text messages.

When an alarm is triggered, it is up to the operator, who possesses expert knowledge of the system, to acknowledge the alarm, diagnose the issue, and take the necessary corrective actions. The root cause detection is entirely dependent on the operator's ability to interpret the short text message displayed on the HMI. This process is repeated each time an issue is notified, making it time-consuming and heavily reliant on the operator's expertise.

One significant limitation of current SCADA systems is the lack of explainability of the cause of alarms and events in the SCADA systems. Operators may be overwhelmed by the sheer volume of alarms generated, leading to information overload. This can result in critical alarms being missed or not addressed promptly or correctly, potentially compromising the safety and efficiency of the operations.

Hence, there is a need for improved methods and systems for handling alarms in SCADA systems.

Summary

An objective of the present inventive concept is to enable improved detection and identification of anomalies and their root causes in SCADA systems.

Another objective is to enhance the explainability of alarms in SCADA systems.

Yet another objective is to minimize information overload for operators of SCADA systems.

A further objective is to automate diagnosis and suggested corrective actions for alarms in SCADA systems to assist operators in making informed decisions quickly and accurately.

Yet a further objective is to enable enhanced explainability of anomalies in data from a SCADA system, thus providing explanations which facilitate better operational efficiency and comprehension of causes of said anomalies.

These and other objectives are at least partly met by the invention as defined in the independent claims. Preferred embodiments are set out in the dependent claims.

According to an aspect of the present inventive concept there is provided a computer-implemented method for generating technical explanations of alarms in a supervisory control and data acquisition, SCADA, system for an electrical infrastructure, the method comprising:

providing a neural network, NN, model trained to detect anomalies in data, wherein the NN model is trained on a training dataset comprising training data based on operational data retrieved by the SCADA system from the electrical infrastructure and comprising data related to a plurality of system parameters of the SCADA system,

receiving run data based on operational data retrieved by the SCADA system from the electrical infrastructure, the run data comprising data related to the plurality of system parameters,

detecting, with the NN model, an anomaly in the run data, and

generating a technical explanation of the detected anomaly by means of an interpretability model,

wherein the interpretability model applies a model-agnostic interpretable technique to the run data to determine a contribution of the system parameters in the plurality of system parameters to the detection of the anomaly,

wherein the NN model and the interpretability model together form a machine learning, ML, model, and

wherein the NN model is trained on the training dataset by:

encoding the training data of the training dataset into a compressed representation,

decoding the compressed representation into reconstructed data, and

minimizing a reconstruction error between the training data and the reconstructed data,

wherein the NN model comprises a plurality of nodes and layers, wherein each subsequent layer of the NN model progressively processes the training data to identify and represent relationships within the training data, and, thus, between the system parameters to which the training data is related.

Hereby, there is provided a method enabling a deeper understanding of SCADA system behavior, and enhanced explainability of alarm conditions.

The explainability enables operators or engineers of the SCADA system to understand what factors cause the SCADA system to raise an alarm. Furthermore, through the availability of explanations, false positives can be filtered out. Overall, reduction in time and effort to diagnose issues in SCADA systems are enabled.

The method further facilitates more informed decision-making from operators of SCADA systems.

In other words, the method may provide explanations of a behavior of a SCADA system, e.g., by identifying reasons or causes for specific events within the SCADA system. Hence, the method enables improved diagnosing and understanding of SCADA system behavior, in turn, enabling maintaining and improving performance of the SCADA system.

In particular, the method can explain, i.e., pinpoint, the root causes of alarms or events, such as system errors, performance bottlenecks, malfunctions, and/or issues with components of the SCADA system. Phrased differently, the method improves detection and identification of anomalies and their root causes in the SCADA system.

The phrase "generating technical explanations of alarms" may generally refer to pinpointing, identifying, indicating, and/or localizing the root cause of an anomaly in the operational run data. In turn, the term "root cause" may refer to a system parameter(s) of the SCADA system which contributes the most to an anomaly in the operational run data.

The system parameters may refer to any measurable variable that the SCADA system monitors and/or controls. These system parameters may, e.g., comprise any one or more of: Temperature, Pressure, Flow Rate, Voltage, and Current.

In an example, the data related to the system parameters may be collected by sensors of the SCADA system. The sensors may, e.g., be integrated throughout the electrical infrastructure.

The electrical infrastructure may, e.g., be a power grid infrastructure or generally relate to Power Grid; Grid Integration (PGGI).

The NN model of the method may output anomaly indicators, e.g., anomaly scores or flags. Anomaly scores are numerical values that represent the likelihood of a data point being anomalous, with higher scores indicating a greater probability of an anomaly. Flags may be binary indicators that classify data points as either normal or anomalous.

The output of the NN model may serve as a reference point for the interpretability model.

The NN model may utilize reconstruction-based anomaly detection, e.g., a class of algorithms designed to map input variables of size N onto a smaller set of variables of size M, where N is greater than M. This dimensionality reduction process allows the NN model to establish the most relevant features of the input data. During the initial training phase, the NN model may be trained with operational data that correspond to non-anomalous conditions. The goal of this training is to minimize the error between the reconstructed data and the actual data, thereby refining the NN model to accurately represent normal conditions. By doing so, the model may learn to recognize patterns and characteristics of non-anomalous data effectively.

Once trained, the NN model is capable of identifying deviations from these learned patterns, which may be indicative of anomalies. This approach allows the NN model to detect unexpected conditions by comparing new input data against an established baseline of normal conditions. The reconstruction error, which is the difference between the input data and its reconstruction, may serve as a measure of anomaly. Larger reconstruction errors may indicate the presence of anomalies, enabling the NN model to flag these instances for further processing and analysis.

During operation of the SCADA system, run data from the SCADA system is fed into the trained NN model. Consequently, the NN model may determine the presence of an anomaly by evaluating the difference between the reconstructed data and the actual run data. If the difference, or reconstruction error, is significant, it may indicate that the input data does not conform to the patterns learned during training, thereby suggesting abnormal or deviating data compared to the 'normal' data the NN model was trained on.

In a sense, the NN model may be a neural network architecture designed to efficiently compress, i.e., encode, input data into essential features and then reconstruct, i.e., decode, the original input from this compressed representation. This process does not rely on labeled training data, making it an unsupervised learning method. By using unsupervised machine learning, the NN model is trained to discover latent variables within the unlabeled input data, i.e., the training data, that reveal how the input data is distributed and uncover hidden patterns in the input data. During training, the NN model learns which latent variables are most effective for accurately reconstructing the original, i.e., non-reconstructed, data.

In other words, each layer of the neural network may refine an understanding of relationships within the data.

It is appreciated that the NN model may be implemented as a single model, an ensemble of models, or a hybrid model.

The interpretability model of the ML model may be external to the NN model. In particular, the interpretability model may receive, as input, the output from NN model. In other words, the interpretability model may be a separate second NN model, e.g., simple or with deep layers, and may take the output of the first NN model as input.

In a sense, the NN model and the interpretability model are integrated to form a comprehensive ML model. In an example, the ML model may be referred to as an explainable artificial intelligence (XAI) model.

It is appreciated that the ML model may be based on various methodologies, e.g., incorporating Artificial Neural Networks, Deep Learning, and/or other machine learning techniques, depending on the data, context, and other circumstantial properties.

The method leverages existing SCADA data and functionalities seamlessly with the ML model. This minimizes the need for additional hardware or software infrastructure within the SCADA system or the electrical infrastructure, making the method more readily implementable in existing SCADA systems.

Generally, the method aims to empower operators of SCADA systems by providing explanations and improving situational awareness. Thus offering context-aware insights that can support faster troubleshooting, informed decision-making, and potentially knowledge transfer between operators. Hence, the method takes a user-centric and integrated perspective, e.g., leveraging XAI for the alarms and events generated within existing SCADA environment to deliver actionable insights that directly benefit operators and enhance SCADA system effectiveness.

The model-agnostic interpretable technique may utilize Shapley additive explanation, SHAP, values to determine the contribution of the system parameters in the run data to the detection of the anomaly.

SHAP values provide a unified approach to interpret machine learning models by attributing the contribution of each feature, i.e., component or sensor reading of the SCADA system, to the prediction. In essence, SHAP values offer a detailed breakdown of how each input variable influences the prediction of a machine learning model. By decomposing the prediction into individual contributions, SHAP provides a clear and interpretable explanation of the NN model's decision-making process.

A resulting dataset of SHAP values may mirror the input data in a structure, e.g., categorical structure of features or sensor readings of the input data, but instead of raw data, it contains the calculated contributions of each input variable, i.e., feature or system parameter.

The SHAP-based approach can be used to explain a single alarm or a set of multiple alarms in the SCADA system. Hence, a common root cause of a plurality of alarms, e.g., seemingly un-correlated or non-obviously correlated, may be identified.

It is appreciated that other techniques then SHAP may be used. For example, local interpretable model-agnostic explanations (LIME) may be utilized. However, LIME is limited to explaining individual predictions, whole SHAP can be applied to both single predictions and global model behavior.

Further, SHAP may be applied in various forms, such as Kernel SHAP or Deep SHAP. Kernel SHAP, like LIME, is model-agnostic, meaning it can be used with any machine learning model. On the other hand, Deep SHAP is model-specific and tailored for deep learning models.

Generally, the model-agnostic interpretable technique builds upon a results-driven approach, focusing on the outcomes of the NN model. However, alternatively, or additionally, a function-driven approach, which may emphasize underlying functions and mechanisms, may be used.

By utilizing SHAP values, both local and global interpretability is enabled. SHAP also provides a more holistic understanding of model behavior compared to methods like LIME, which are limited to local explanations.

Hereby, SHAP enhances the transparency and understanding of the NN model's outputs, enabling accurate pinpointing of root causes of anomalies detected by the NN model.

In other words, the SHAP values may be used to highlight features, e.g., sensor readings from the SCADA system, that contribute the most to the identification an anomaly. In particular, the training process of the NN model enables the NN model to learn relationships between sensor readings, events, and alarms in the SCADA system.

The run data retrieved by the SCADA system may be real-time data, and the NN model may be trained on training data retrieved by the SCADA system during a time interval that is separate from the retrieval of the real-time data.

In other words, the run data may be a live or real-time stream of, e.g., unlabeled, data from the SCADA system.

Generally, the term 'data', corresponding to 'operational data', may herein be referred to sensor readings, event logs, historical data archives, manuals, and/or data sheets of the SCADA system.

The specific type of data related to the SCADA system may depend upon circumstantial matters of the SCADA system, system configuration, or customer needs.

The computer-implemented method may comprise providing the training data by preprocessing the operational data.

In other words, the operational data may be processed before being used as training data. This preprocessing step may include cleaning, transforming, and/or organizing the raw operational data to ensure it is in a suitable format for training the NN model. Hence, enhanced quality and relevance of the training data is provided. The preprocessing may involve mitigate noise, handling missing values, normalizing the data, and/or handling known deviations in the data.

By ensuring that the training data is clean, the method improves the accuracy and reliability of the NN model for detecting anomalies. Thereby, it enhances the overall efficiency of the training process and reduces the likelihood of errors and biases in the model predictions. Additionally, the preprocessing facilitates better generalization of the NN model to new, unseen data, ultimately leading to more robust anomaly detection.

The preprocessing of the operational data collected from the SCADA system may be performed, e.g., partly, by domain experts.

The preprocessing of the operational data may comprise at least one of: excluding data collected during periods when at least a part of the SCADA system is on a scheduled maintenance plan or site tests are being carried out, removing records that contain non-numeric values, NaN, applying a backfill approach to fill in missing data, downscaling raw data, and preprocessing data according to rules based on a subsystem within the SCADA system.

However, it is to be understood that the preprocessing may involve any suitable steps of processing of the operational data.

The interpretability model may be trained on labeled data. In other words, the run data may be labeled before reaching the interpretability model.

Hence, the interpretability model may learn relationships between labels and data. Thereby, improved identification and pinpointing of root causes, such as a specific sensor of the SCADA system, of anomalies may be provided.

In a sense, each type of label may represent a corresponding system parameter of the SCADA system. In other words, a data label and a system parameter may relate to a same feature. In an example, data may be labeled as temperature data, and correspondingly, a system parameter may be a temperature parameter.

The labeled data may be labeled, by a self-supervised model, based on patterns from unlabeled data.

In other words, the method may involve using a self-supervised model to label data. The self-supervised model may learn from unlabeled data, which facilitates dealing with large and complex datasets where manual labeling is impractical and requires domain expertise. By leveraging patterns found in the unlabeled data, the self-supervised model can generate labels, i.e., effectively transforming the raw data into labeled data.

Further the method enables the use of semi-supervised techniques, where a small amount of labeled data guides the labeling of larger unlabeled datasets. This may enhance adaptability and effectiveness of the ML model in dynamic environments.

The computer-implemented method may further comprise, via an incremental learning model: monitoring the run data for a data drift in the run data, and upon detecting a data drift in the run data, updating the NN model to adapt to behaviors of the run data caused by the data drift.

In other words, the method may involve using an incremental learning model to continuously monitor the run data for any signs of data drift.

The term 'data drift' refers to a change in the statistical properties of the input run data over time. Drift in data can hence lead to a decline in the performance of the trained NN model.

Data drift occurs, e.g., when the environment, equipment, or other operational aspects of the SCADA system evolve or change, causing the input run data to deviate from the training data the NN model was originally trained on.

To address data drift, the incremental learning model may monitor the incoming run data and trigger updates to the NN model, e.g., a baseline NN model, when degraded performance or variations, such as substantial variations, are detected. In a sense, by creating a new baseline NN model that reflects current or real-time data distribution, the method enables more accurate and effective processing of the data. Phrased differently, the incremental learning model may update the NN model to adapt to the new behaviors exhibited by the run data and the SCADA system as such. This ensures that the NN model remains accurate and effective despite changes in the data it processes.

In an example, once the NN model is trained, a first baseline model may be created for deployment to validate the incoming data from operations of the SCADA system. Over time, if drifts are observed in the data, the incremental learning model may trigger an update to the first baseline model to incorporate changes of the drift. Consequently, a second baseline NN model may take over to continue processing the data. This process of the incremental learning model may repeat as necessary. In practice, the baseline update may involve retraining the NN model with the new, i.e., drifted, data.

Notably, instead of retraining the NN model from scratch, different strategies for adapting the NN model to new incoming data distributions may employ fine-tuning on the pre-trained NN model. Fine-tuning can be performed in various ways, such as making small adjustments to the weights of an existing model, tuning hyperparameters, or modifying the NN model's layers. This targeted fine-tuning process may ensure that the NN model can quickly and efficiently adapt to changes in the data, leveraging the knowledge already embedded in the pre-trained model while minimizing computational demands. Another approach involves freezing selected layers of the encoder and allowing the later layers to adapt to the new data. In complex data scenarios such as of power grids that have multiple sub-domains and high variability, a combination of these techniques helps the NN model to effectively adapt to different aspects of the data.

The method hence allows for real-time adjustments to the NN model, ensuring the NN model maintains its relevance and accuracy even in dynamic environments. In particular, by continuously updating the NN model in response to detected data drifts, the method ensures that the NN model can handle evolving data patterns and remain effective over time. Thereby, it also reduces the need for frequent manual retraining and redeployment of the NN model. Additionally, this enhances the adaptability of the method, making it more resilient to changes in the data.

The incremental learning model may be part of the ML model. In other words, the NN model, the interpretability model, and the incremental learning model may collectively be referred to, and considered to form part of, the ML model. In particular, each of the NN model, the interpretability model, and the incremental learning model may be a neural network model by itself, each with its own architecture, data, set of parameters, etc.

The computer-implemented method may further comprise: providing a rule-based explanations, RBE, model, wherein the RBE model comprises rule-based explanations derived from a preprogrammed code within the SCADA system, the preprogramed code defining relationships between the run data retrieved by the SCADA system and alarms in the SCADA system, detecting, with the RBE model, an anomaly in the run data retrieved by the SCADA system, generating, based on an output from the RBE model, a technical explanation of the anomaly, providing a validation module for cross-verification, and cross-validating, with the validation module, the technical explanation from the RBE model and the technical explanation from the ML model.

In other words, the preprogrammed code may highlight specific conditions that trigger alarms in the SCADA system. For example, the preprogrammed code may define known relationships between sensor readings and alarms of the SCADA system.

Rule-based explanations (RBE) may herein refer to explanations derived from predefined rules or logic, e.g., pre-engineered logics derived during design of the SCADA system. The rules may, e.g., be embedded in a code of the SCADA system. The rules may thus specify the conditions under which certain alarms are triggered. In particular, the rules may facilitate breaking down complex function decisions into discrete outputs and present them to operators, e.g., as notification in form of alarms/events for actions.

Deriving the rules from engineering logic, e.g., embedded in blocks of code or programmed functional code blocks, may be achieved using specific computer programs or by employing technologies like language models to process and parse the functional code.

The specific rules may be customized based on specific needs or conditions of the operations of the SCADA system, making the SCADA system more adaptable and responsive to different scenarios.

In a particular example, a rule might state that if ambient temperature measurements exceed a certain threshold, an alert should be triggered and tell a cooling system of the SCADA system to, e.g., switch on fans. In turn, the cooling system may verify if all fans are operating at expected throughput.

Hence, the RBE model may provide complementary explanations for alarms, contributing to improved identification of underlying causes of alarms and anomalies.

The validation module may cross-reference the output from the RBE model with the output from the ML model. In other words, the validation module may be designed to cross-validate the output from the RBE model with the output from the ML model.

The cross-validation may ensure that the final output is robust and verified, leveraging the strengths of both the RBE model and the ML model. By comparing the outputs from the models, the validation module may identify any discrepancies or consistencies between the two models.

The validation module may, e.g., merge the two outputs based on certain criteria. Some exemplary merging criteria may comprise any one or more of: a timestamp, a severity from the SACADA alarm for prioritization, whether both models found the same explanation, i.e., root cause, and segregation of the type of alarms.

By validating outputs from two different models, the final result is less likely to be affected by the limitations or biases of a single model. This dual-model approach provides a more comprehensive analysis, capturing a wider range of potential errors and inconsistencies. Additionally, cross-validation increases accuracy by identifying root causes of anomalies that may be overlooked by a single model. It also facilitates identifying spurious alarms, or false alarms that may be triggered without the presence of an actual fault, e.g., due to various factors like temporary fluctuations, sensor faults, or other issues. Hence, the combined insights from both models lead to a more accurate and reliable final output, i.e., explanation. The NN model may, e.g., diagnose the alarms/faults by analyzing complex patterns and correlations that the rule-based engine might miss.

Further, by utilizing different models with varying methodologies a broader perspective on the data may be provided, capturing various aspects and leading to a holistic validation process.

The validation module may be a decision-making merge node.

In other words, the validation module may serve as a convergence point where the results from different models are combined to assess their consistency and accuracy. The decision-making merge node can be realized or implemented in various forms, e.g., including software algorithms that perform statistical analysis, machine learning frameworks that use ensemble methods, or rule-based systems that apply predefined criteria to merge and validate the outputs.

The decision-making merge node may act as a decision-making layer with the outputs from both the ML model and the RBE model. This decision-making merge node may use logic such as any one or more of:

　　i) Consensus based logic, e.g., where both the RBE and the ML model agree on the fault.
　　ii) Weighted Scoring based logic, e.g., where weights are assigned to the confidence levels of both systems and then combined to make a final decision.

iii) Sequential Processing based logic, e.g., where the RBE model is used for initial screening and the ML model is used for secondary validation.

iv) Create a feedback loop where the ML model's diagnosis results are used to update and refine the rules in the RBE model. This may be a continuous improvement process that facilitates to adapting to new fault patterns and reducing false alarms over time.

By functioning as a decision-making merge node, the validation module ensures that the final output is accurate.

Hence, the validation module may integrate the outputs from the RBE model and the ML model, making informed decisions based on the combined outputs. The merge node may allow for a more nuanced and comprehensive evaluation of the outputs, ensuring that the final technical explanation is accurate. By acting as a decision-making merge node, the validation module enhances the overall decision-making process, providing a more reliable and validated final output.

The ML model may represent a first ML model, wherein the method further comprises providing a second ML model, wherein the first ML model generates technical explanations of anomalies in numeric data from the SCADA system, and wherein the second ML model generates technical explanations of anomalies in statuses of communication devices in the SCADA system.

In other words, one ML model may be provided to manage continuous numeric data from the SCADA system for process monitoring, and one ML model may be provided to handle status of communication devices within the SCADA system for network monitoring.

By using different ML models for various aspects of the SCADA system, enhanced functionality and performance of the method may be enabled. Hence, by employing multiple ML models, increased robustness of the method can be provided.

According to a second aspect of the present inventive concept there is provided a non-transitory computer-readable medium storing instructions thereon which, when executed by a processor, cause the processor to carry out the steps of the method according to the first aspect.

This aspect may generally present the same or corresponding advantages as the former aspect.

According to a third aspect of the present inventive concept there is provided an explainability system configured to detect and provide technical explanations of anomalies in data retrieved by a supervisory control and data acquisition, SCADA, system, the explainability system comprising:

a neural network, NN, model trained to detect anomalies in data, wherein the NN model is trained on a training dataset comprising training data based on operational data retrieved by the SCADA system, and
an interpretability model configured to apply a model-agnostic interpretable technique to the data to determine a contribution of a plurality of SCADA system parameters in the data to a detection of an anomaly detected by the NN model, and configured to, based on the determined contribution, output a technical explanation of the anomaly, wherein the NN model and the interpretability model together form a machine learning, ML, model, and wherein the NN model is trained on the training dataset by:

encoding the training data of the training dataset into a compressed representation,
decoding the compressed representation into reconstructed data, and
minimizing a reconstruction error between the training data and the reconstructed data, wherein the NN model comprises a plurality of nodes and layers, wherein each subsequent layer of the NN model progressively processes the training data to identify and represent relationships within the training data and, thus, between SCADA system parameters to which the training data is related.

This aspect may generally present the same or corresponding features and advantages as the former aspects.

The explainability system may further comprise: a rule-based explanations, RBE, model comprising rule-based explanations derived from a preprogrammed code, the preprogramed code defining relationships between the data retrieved by the SCADA system and alarms in the SCADA system, wherein the RBE model is configured to output a technical explanation of the anomaly based on the rule-based explanations, and a validation module for cross-verification of the technical explanation from the RBE model and the technical explanation from the ML model.

Hence, the RBE model may provide complementary explanations for alarms, contributing to improved identification of underlying causes of alarms and anomalies.

Further, the cross-validation may ensure that the final output is robust and verified, leveraging the strengths of both the RBE model and the ML model. By comparing the outputs from the models, the validation module may identify any discrepancies or consistencies between the two models.

Effects and features of the first, second, and third aspects are largely analogous. Examples mentioned in relation to the first, second, and third aspects are largely compatible. It is further noted that the disclosure relates to all possible combinations of features unless explicitly stated otherwise.

Brief description of the drawings

The above, as well as additional objects, features and advantages of the present inventive concept, will be better understood through the following illustrative and non-limiting detailed description, with reference to the appended drawings. In the drawings like reference numerals will be used for like elements unless stated otherwise.

Fig. 1A is a flow chart of a computer-implemented method for generating technical explanations of alarms in a supervisory control and data acquisition, SCADA, system for an electrical infrastructure.
Fig. 1B is a flow chart of a computer-implemented sub-method for training a neural network model.
Fig. 2 is a flow chart of a computer-implemented sub-method for generating technical explanations of alarms in a SCADA system.
Fig. 3A is an exemplary waterfall plot of SHAP values for a specific set of SCADA system parameters.
Fig. 3B is an exemplary custom function for visually presenting the contribution of SCADA system parameters to the detection of an anomaly in data from a SCADA system.
Fig. 4 is a schematic block diagram of an explainability system for generating technical explanations of anomalies in operational data from a SCADA system.
Fig. 5 is schematic block diagram of an explainability system comprising two models for generating technical explanations of anomalies in operational data from a SCADA system.

Detailed description

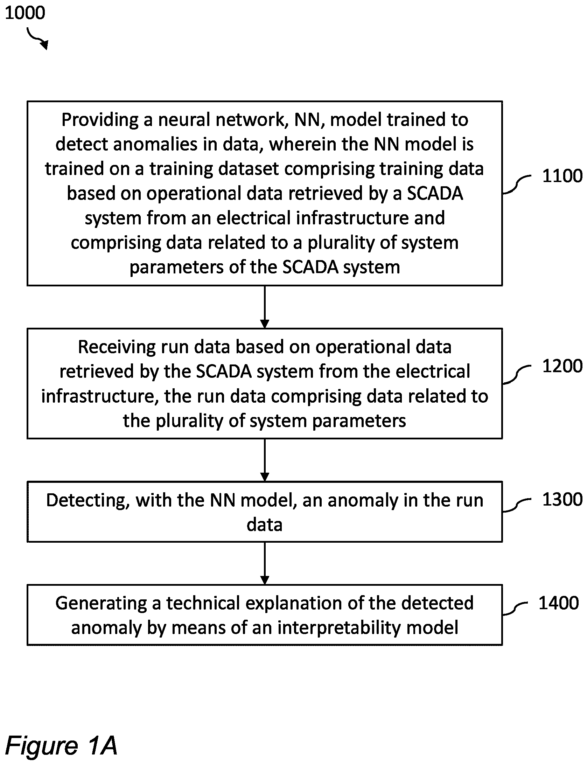

Fig. 1A illustrates a flow chart of an exemplary embodiment of a computer-implemented method 1000 for generating technical explanations of alarms in a supervisory control and data acquisition, SCADA, system for an electrical infrastructure. The method 1000 comprises:

providing 1100 a neural network, NN, model trained to detect anomalies in data, wherein the NN model is trained on a training dataset comprising training data based on operational data retrieved by the SCADA system from the electrical infrastructure and comprising data related to a plurality of system parameters of the SCADA system,
receiving 1200 run data based on operational data retrieved by the SCADA system from the electrical infrastructure, the run data comprising data related to the plurality of system parameters,
detecting 1300, with the NN model, an anomaly in the run data, and
generating 1400 a technical explanation of the detected anomaly by means of an interpretability model.

Although not shown in Fig. 1A, the interpretability model of the method 1000 applies a model-agnostic interpretable technique to the run data to determine a contribution of the system parameters in the plurality of system parameters to the detection of the anomaly.
Hence, the method 1000 may improve the internal functioning of the SCADA system by providing actionable insights that can be used to improve system operations. For example, by identifying issues and their causes, preventive measures or repairs to the SCADA system can be implemented to avoid future occurrences of the same issues. Thus, improved SCADA system robustness and operational efficiency is provided. In particular, the ability to explain SCADA system behavior and identify causes of alarms, i.e., anomalies in the system parameters of the SCADA system, enhances the functioning of the SCADA system.
Furthermore, the method 1000 may comprise, via an incremental learning model: monitoring the run data for a data drift in the run data, and upon detecting a data drift in the run data, updating the NN model to adapt to behaviors of the run data caused by the data drift.
Moreover, the method 1000 may comprise: providing a rule-based explanations, RBE, model, wherein the RBE model comprises rule-based explanations derived from a preprogrammed code within the SCADA system, the preprogramed code defining relationships between the run data retrieved by the SCADA system and alarms in the SCADA system, detecting, with the RBE model, an anomaly in the run data retrieved by the SCADA system, generating, based on an output from the RBE model, a technical explanation of the anomaly, providing a validation module for cross-verification, and cross-validating, with the validation module, the technical explanation from the RBE model and the technical explanation from the ML model.
Further, it is appreciated that the method 1000 may involve systematic aggregation and storage of data from the SCADA system into a centralized data storage. This may comprise extracting relevant data from either code or design data of the SCADA system and, alternatively, converting it into a storage format that facilitates easy lookup and access. The stored data may be preserved for future improvements and the creation of a comprehensive knowledge base. This knowledge base may serve as a repository of information that can be leveraged for fleet learnings, enabling continuous enhancement and optimization of the workings of the SCADA system.

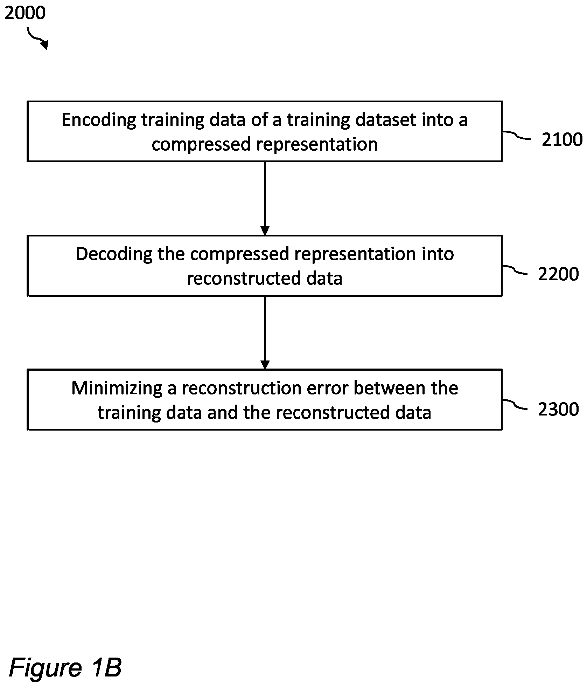

Furthermore, as shown in Fig. 1B the above-described embodiment of the method comprises a sub-method 2000 for training the NN model. The NN model is trained on a training dataset by:

> encoding 2100 the training data of the training dataset into a compressed representation,
> decoding 2200 the compressed representation into reconstructed data, and
> minimizing 2300 a reconstruction error between the training data and the reconstructed data.

Although not stated in Fig. 1B, the NN model comprises a plurality of nodes and layers, wherein each subsequent layer of the NN model progressively processes the training data to identify and represent relationships within the training data, and, thus, between the system parameters to which the training data is related.

The training data may serve as a ground truth against which the NN model's output may be measured. In some cases, a slightly altered version of the training data may be used as the ground truth, e.g., to account for specific known anomalies, variations, or noise in the data. This type of neural network may be referred to as an autoencoder and is considered a form of self-supervised learning.

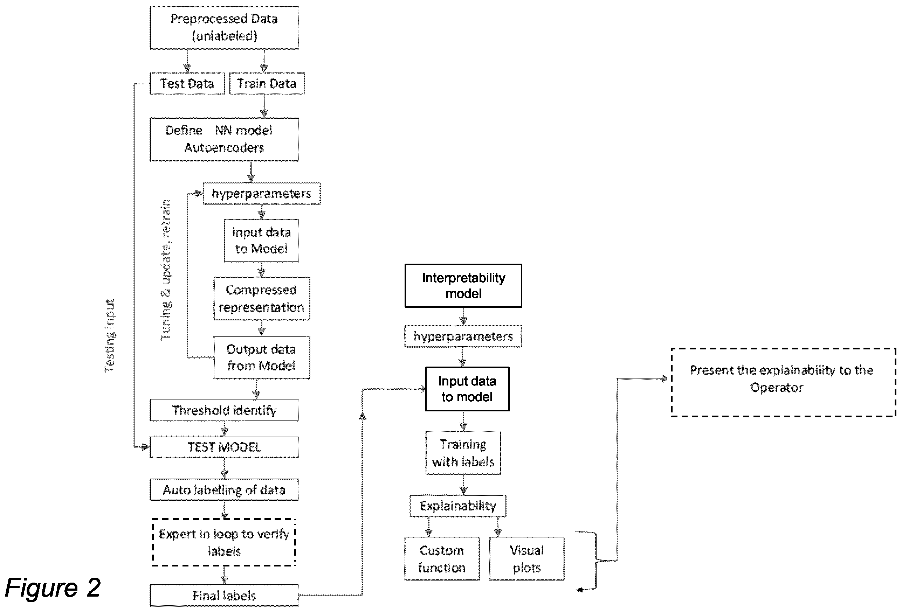

According to an embodiment of the computer-implemented method for generating technical explanations of alarms in a SCADA system for an electrical infrastructure it comprises a sub-method for generating technical explanations of alarms in the SCADA system, as illustrated in Fig. 2.

As shown in Fig. 2, test data and training data are provided by preprocessing operational data from the SCADA system, e.g., collected over broad and extensive operational scenarios and/or seasonalities.

In a non-limiting example, the preprocessing of the operational data may, comprise at least one of: excluding data collected during periods when at least part of the SCADA system is on a scheduled maintenance plan or site tests are being carried out, removing records that contain non-numeric values, NaN, applying a backfill approach to fill in missing data, downscaling raw data, and preprocessing data according to rules based on a subsystem within the SCADA system. However, the preprocessed data may be preprocessed in any suitable manner.

Further, as shown in parentheses, the preprocessed data may be unlabeled data. Hence, the data on which the NN model trains may not necessarily be labeled, meaning that the NN model can learn from patterns and structures within the operational data itself without explicit labels.

The preprocessed data in Fig. 2 is split into training data and test data. In an example, 80% of the preprocessed data may be used for training, and 20% for testing, however, it is to be understood that other ratios may be used.

The NN model described herein operates as a reconstruction-based model, commonly referred to as an autoencoder. In this framework, the NN model is designed to learn an efficient representation of the input data by compressing it into a lower-dimensional space and then reconstructing it back to its original form.

Firstly, hyperparameters are defined to configure the NN model. These are settings that influence the NN model's performance and learning process and may be configured before training the NN model. Key hyperparameters may include any one or more of: the number of layers, the number of neurons in each layer the learning rate, size of the compressed representation (latent space size), batch size, loss function, optimizers, activation functions, epochs, etc. These parameters influence the model's capacity to learn and generalize from the data.

Once the hyperparameters are set, the training data is fed into the NN model. The NN model processes this data through an encoder, which compresses the input data, i.e. the training data, into a compact, latent representation. This compressed representation captures the essential features of the input data while discarding redundant information. The encoder typically consists of several layers of neurons that progressively reduce the dimensionality of the data.

Following the encoding phase, the latent representation is passed through a decoder (not shown in Fig. 2), which reconstructs the data back to its original form. The decoder mirrors the structure of the encoder but operates in reverse, gradually expanding the compressed data back to its original dimensions. The output data generated by the NN model, i.e. the output data of the decoder, is then compared to the original input data to calculate a reconstruction error.

This reconstruction error serves as a feedback signal for the NN model. By minimizing this error through iterative training, the model learns to produce more accurate reconstructions. The training process may involve multiple epochs, where the entire training dataset is passed through the NN model several times to refine its weights and biases.

Additionally, the process of tuning, updating, and re-training the NN model can be repeated as necessary, e.g., in response to data drifts. Tuning involves adjusting the hyperparameters to optimize the NN model's performance. Updating refers to modifying the NN model's architecture or training data to improve its accuracy and generalization capabilities. Re-training involves re-running the training process with updated data or parameters to ensure the model remains effective over time.

Following the reconstruction phase, a "threshold identify" step is implemented to evaluate reconstruction errors against predefined criteria. These thresholds may be defined to identify deviations in the reconstruction errors and may be established based on statistical measures, domain knowledge, empirical data, and/or may serve as benchmarks.

Threshold identification may apply different methods such as a) Statistical methods viz. percentile-based threshold where the threshold is set at a specific percentile (e.g., 95th or 99th percentile), or standard deviation method where the threshold is set as a certain number of standard deviations above the mean (e.g., mean + 3 standard deviations) of the reconstruction errors. b) Reconstruction error distribution methods like histogram analysis method with the plot of a histogram, or through a Kernel Density Estimation (KDE) to estimate the probability density function of the reconstruction errors. The threshold may be set based on the density function to capture the tail end of the distribution.

After the NN model has been trained and the thresholds have been identified, the next step of the sub-method for generating technical explanations of alarms in the SCADA system involves evaluating the NN model with the test data. The test data, being distinct from the training data, is used to evaluate the performance of the NN model. The NN model processes the test data in the same manner as the training data, generating compressed representations and reconstructing the output. By comparing the reconstructed output to the original test data, various performance metrics such as accuracy, precision, recall, and/or reconstruction error can be calculated.

As a next step, auto labeling of data is performed. The auto labelling may involve a self-supervised model for labeling the unlabeled data, i.e., operational data from the SCADA system, based on patterns in the unlabeled data. By leveraging such patterns, the self-supervised model assigns labels to the unlabeled data, effectively categorizing them based on their inherent characteristics. The auto labeling process may be iterative, e.g., allowing the self-supervised model to refine its labeling criteria over time.

Further, in an example, the generated labels may be validated against a small set of manually labeled data to ensure accuracy. For instance, a domain expert may verify or validate the labels.

The labeled data is then inputted into the interpretability model. The interpretability model here has its own hyperparameters, and trains with the labeled data to learn relations between the labels and the data.

The interpretability model then explains, i.e., identifies or indicates, contributors to anomalies in the data, such as anomalies in system parameters of the SCADA system. In other words, the interpretability model generates a technical explanation of anomaly alarms raised in the SCADA system.

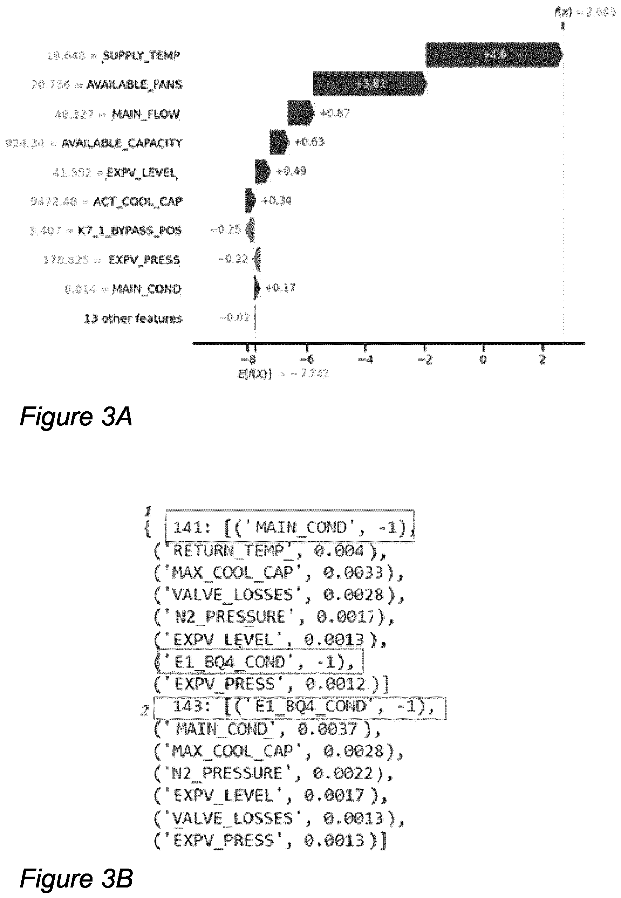

The generated technical explanation can then, e.g., be embodied in a visual plot or a custom function (see Figs. 3A-B). Generally, the technical explanation, i.e., output, may be formatted in a presentable manner to operators of the SCADA system.

In an example, the operational run data from the SCADA system may be associated with time indices. Hence, the NN model may mark time indices for which anomalies are detected, e.g., with an anomaly tag. Thus, the technical explanations generated may be tied to a point in time, e.g., to be presented for an operator.

Fig. 3A illustrates an exemplary visual output for indicating the root cause or contributing factors to a detected anomaly in operational data of a SCADA system.

In particular, in this example, the interpretability model as described in relation to Figs. 1A and 2, utilizes a SHAP value model-agnostic interpretable technique to determine the contribution of system parameters in run data, from a SCADA system, to the detection of an anomaly in the run data. The SHAP values may represent an average marginal contribution to a prediction of the NN model, e.g., by considering all possible combinations of features involved.

The visual output in Fig. 3A is illustrated as a SHAP waterfall plot. The waterfall plot represents SHAP values at a single instance, i.e., a single time index, for a single anomaly detection, or prediction, by the NN model discussed in relation to Fig. 1A-B and 2.

For the specific time index shown here, the names, i.e., labels, of the variables or system parameters of the SCADA system contributing to detection of the anomaly are on the vertical axis of the SHAP waterfall plot. Each variable is represented by a horizontal bar provided with an arrow at one end thereof. The length of the bar corresponds with the contribution of the specific variable to the anomaly detection. Positive contributions, i.e., positive SHAP values, for variables indicate a higher contribution to detected anomaly, while negative contributions, i.e., negative SHAP values, for variables indicates a lower contribution to the detected anomaly.

The waterfall plot provides all the input variables from the SCADA system and their contributions towards the prediction for the specific time index. These input variables are ranked from top to bottom based on how much they impact the NN model's prediction. Specifically, for the time index shown in Fig. 3A, the first major contributor to marking this time index as an anomaly is the value of the 'supply temperature' (shown in the plot as SUPPLY_TEMP), followed by the available number of fans, and so on (in Fig. 3A only the nine largest contributing variables are shown explicitly). Further, a number next to each variable name indicates the value of said variable at this particular time index.

Hereby, SHAP values quantify to what degree and in which direction each variable impacts the prediction of an anomaly. The SHAP values shown by the positive arrows correspond to the input variables that push the NN model towards predicting an anomaly, while those by the negative arrows push the NN model towards predicting 'not-an-anomaly'. The sum of SHAP values for all features equals the difference between the model's prediction and an average prediction. A final prediction may be calculated as:

$$f(x) = \phi_0 + \sum_{i=1}^{M} \phi_i$$

where $f(x)$ is the model's prediction for input $x$, $\phi_0$ is the average prediction over the training dataset (also known as the base value), $\phi_i$ is the SHAP value for feature $i$ and $M$ is the total number of features. Hence, the base value may serve as a reference point for understanding how much each variable system parameter contributes to the deviation of a specific prediction from this average.

The waterfall plot in Fig. 3A effectively demonstrates how individual system parameters of the SCADA system influence the NN model's detection of the anomaly, i.e., reasons for why the anomaly was detected by the NN model.

By examining the waterfall plot, operators of the SCADA system can identify which system parameters have the most significant impact. The visualization is particularly useful for pinpointing root causes, of anomalies in data, or reasons for alarms being raised in SCADA systems.

It is appreciated that other methods for visualization or processing of technical explanations may be used. For example, any suitable bar plot, force plot, beeswarm plot, and/or dependence plot may be utilized.

Alternatively, as depicted in Fig. 3B, a custom function may be written and utilized to fetch the list of variables and their scores. This custom function allows for a tailored analysis of the data, providing specific insights into the factors contributing to anomalies. The example shown in Fig. 3B is for randomly chosen time indices 141 and 143 of a simulation.

For time index 141, the main contributor to the anomaly is the 'Main conductivity' value (shown as 'MAIN_COND') and the 'treatment circuit conductivity' (shown as 'E1_BQ4_COND'). An exemplary reason may be that if the treatment circuit could not treat/reduce the conductivity value, the main conductivity that is fed to the cooling system is high, consequently a check of the treatment circuit may be performed.

In contrast, for time index 143, the only significant contributor is the 'treatment circuit conductivity' (shown as 'E1_BQ4_COND').

In a non-limiting example, the output from the custom function can be formatted to present explanatory sentences to the operators of the SCADA system. For example, the formatted presentation can be structured as shown in the below table:

| Example Index | Example Explanation provided to Operator |
|---|---|
| Index 141 | At time index 141, the value of **E1_BQ4_COND** and **MAIN_COND** are the main causes of the anomalous observation. |
| Index 143 | At time index 143, the value of **MAIN_COND** is main cause of the anomalous observation |

Further, global interpretability may be considered. Global interpretability involves predictions across an entire dataset of operational data from the SCADA system, rather than focusing on individual instances of time indices. By aggregating the SHAP values for individual instances across the entire dataset, a comprehensive view of the model's behavior is provided. Specifically, global interpretation with SHAP involves examining the mean absolute SHAP value for each variable across all data points in the data. This approach quantifies, on average, the magnitude of each variable's contribution towards the predicted anomalies. Variables with higher mean absolute SHAP values may be identified as more influential, as they have a greater impact on the predictions of the NN model.

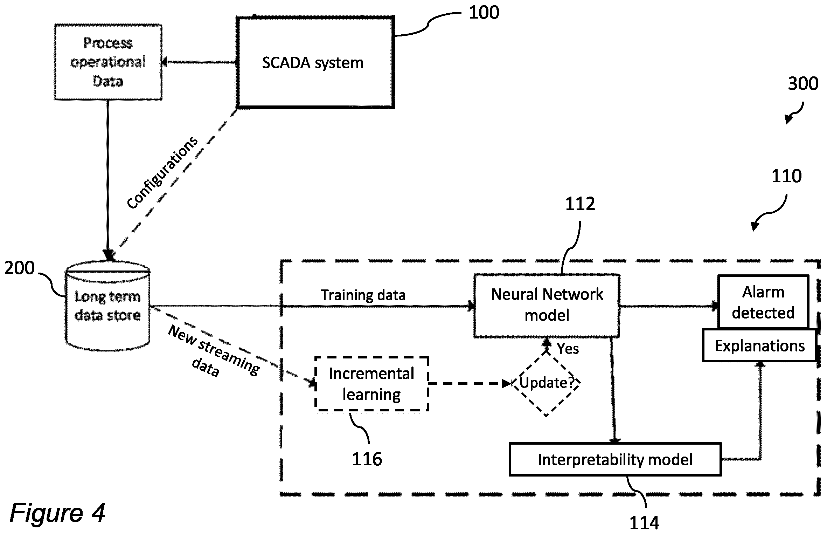

Fig. 4 depicts an exemplary embodiment of an explainability system 300 configured to detect and provide technical explanations of anomalies in data retrieved by a supervisory control and data acquisition, SCADA, system 100. The explainability system 300 comprises: a neural network, NN, model 112 trained to detect anomalies in data, wherein the NN model 112 is trained on a training dataset comprising training data based on operational data retrieved by the SCADA system 100; and an interpretability model 114 configured to apply a model-agnostic interpretable technique to the data to determine a contribution of a plurality of SCADA system parameters in the data to a detection of an anomaly detected by the NN model 112, and configured to, based on the determined contribution, output a technical explanation of the anomaly.

The NN model 112 may be configured to detect or flag for anomalies in the operational data. In particular, the NN model 112 may raise an alarm for the SCADA system 100 to indicate that an anomaly has been detected.

Further, the NN model 112 in the explainability system 300 is trained on the training dataset by: encoding the training data of the training dataset into a compressed representation, decoding the compressed representation into reconstructed data, and minimizing a reconstruction error between the training data and the reconstructed data.

Although not depicted in the figure, the NN model 112 comprises a plurality of nodes and layers, wherein each subsequent layer of the NN model 112 progressively processes the training data to identify and represent relationships within the training data and, thus, between SCADA system parameters to which the training data is related.

As discussed previously, the NN model 112 may be based on a reconstruction-based approach, wherein the "normal", i.e., expectedly behaving, data can be accurately reconstructed, while "abnormal", i.e., unexpectedly behaving data would result in high reconstruction errors. Hence, autoencoders, e.g., single model or an ensemble model, may be used to train on normal data.

As shown in Fig. 4, the operational data used for training the NN model 112 may be retrieved from a long-term data storage 200. The long term storge may comprise operational data from the SCADA system 100 from a time interval of, e.g., at least one year, i.e., long-term history data.

The operational data is here processed before entering the long-term data storage 200, e.g., as performed by the above-described method.

However, the run data retrieved by the SCADA system 100 is real-time data. In particular, the NN model 112 is trained on training data retrieved by the SCADA system 100 during a time interval that is separate from the retrieval of the real-time data.

Generally, the initial training of the NN model 112 may be on normal data, e.g., corresponding to everyday operations of the SCADA system where abnormal data would be removed, so as to baseline "normal" in the NN model 112. Once the NN model 112 is trained and validated, a first baseline can be deployed to validate the incoming live unfiltered stream of data from operations of the SCADA system 100.

Overtime, if there is seen drifts in the data, an incremental or continual learning model could trigger an update to the first baselined model. Hence, a second baseline model may be established to process the live unfiltered stream of data.

The explainability system 300 may optionally comprise an incremental learning model 116. The incremental learning model 116 monitors the data for data drifts. Upon detecting a data drift, the incremental learning model updates the NN model 112 to adapt to new behaviors of the data caused by the data drift. In other words, after initial training of the NN model 112, the 'final' NN model 112 can be saved and extended with an incremental learning model wherein new streaming data can be, e.g., periodically, split into batches for incremental learning. In other words, additional new learning patterns in the NN model 112 may be filled in. Notably, although the new streaming data in Fig. 4 is depicted to be provided from the long-term data storage 200, the new streaming data may be provided directly from the SCADA system 100, or after preprocessing of real-time run data from the SCADA system 100.

The NN model 112 and the interpretability model 114 are herein referred to as to single a machine learning, ML, model 110. In an example, also the incremental learning model 116 may be considered to form part of the ML model 110. Hence, the ML model 110 may be an ensemble of models.

In a particular example (not explicitly illustrated in the figure), the ML model 110 may represent a first ML model, e.g., for generating technical explanations of anomalies in numeric data from the SCADA system 100, and a second ML model, e.g., for generating technical explanations of anomalies in statuses of communication devices in the SCADA system 100. The first- and second-ML models would then be more specialized, trained to handle different sections of the operational data more effectively.

In summary, the explanation system depicted in Fig. 4 may be considered to comprise three main parts: i) the NN model 112 for detecting anomalies, ii) the optional incremental learning model 116 for deciding if the NN model 112 needs to get updates over time, e.g., due to variation in environment, equipment, or other operational aspects, and iii) the interpretability model 114 to derive the explanations for the detected anomalies.

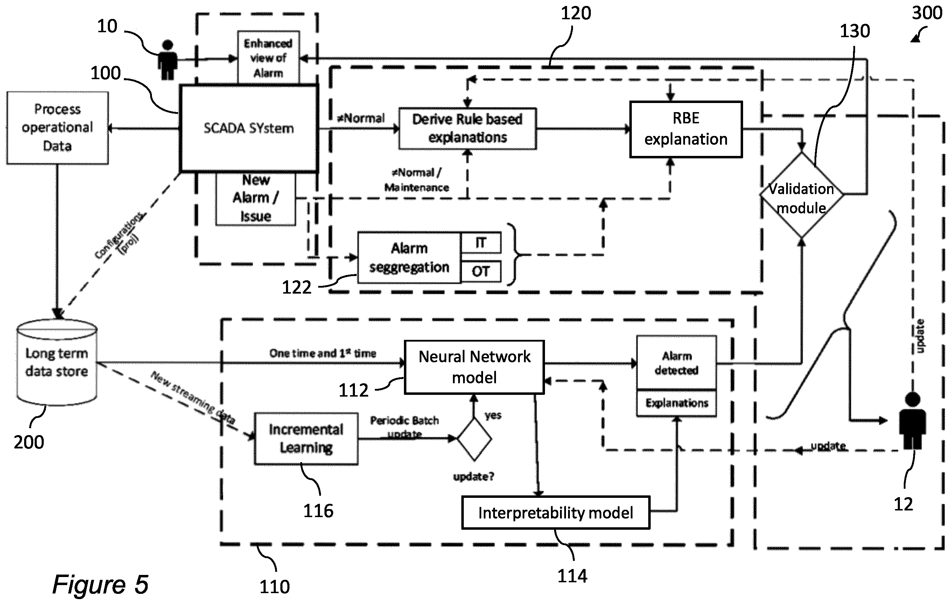

Fig. 5 illustrates an exemplary embodiment of an explainability system 300 similar to the embodiment described above in conjunction with Fig. 4. However, in this embodiment the explainability system 300 further comprises a rule-based explanations, RBE, model 120 comprising rule-based explanations derived from a preprogrammed code. The preprogramed code may define relationships between the data retrieved by the SCADA system 100 and alarms in the SCADA system 100.

The RBE model 120 is configured to output a technical explanation of anomalies based on rule-based explanations.

Hence, the operational data from the SCADA system 100 is processed by both the RBE model 120 and an ML model 110.

Furthermore, a validation module 130 is provided. The validation module 130 cross-verifies the technical explanation from the RBE model 120 with the technical explanation from the ML model 110. In an example, the validation module 130 may be a decision-making merge node.

An assumption for the validation module 130 to function is that the data entering the RBE model and ML model 110, respectively, is the same at each instance, i.e., that a same time index of the data is considered. Further, the same variables, i.e., SCADA system parameters, should be considered for both the RBE model 120 and the ML model 110.

The validation module 130 in Fig. 5 is illustrated to be supervised by a reviewer 12, e.g., any data scientist, domain expert, and/or computer program. The reviewer 12 may, e.g., inspect the technical explanations from the ML model 110 and the RBE model 120. Similarly, the reviewer 12 may supervise the validation module 130 in the cross-validation or cross-referencing of the technical explanations from the ML and RBE models 110, 120. The reviewer 12 may further update the NN model 112 of the ML model 110. Likewise, the reviewer 12 may update the RBE model 120. The reviewer 12 may trigger updates of the NN and/or RBE models 112, 120, e.g., based on observed behavior of the models or based on the generated technical explanations.

In an example, both the RBE and the ML based explanations may be combined, per time index, to provide an overall explainability. A condition to combine the explanations may be that an anomaly was detected at the same time index in both the RBE and ML models 120, 110.

In another example, as the ML model 110 may output a set of system parameter names indicating the system parameters contributing to the detection of an anomaly, e.g., using SHAP values, the explanation from the RBE model 120 may be compared with the explanation from the ML model 110 by checking if the system parameter name from the rule-based explanation exists in the set of system parameter names outputted by the ML model 110.

In yet another example, Dempster-Shafer theory may be applied. By leveraging Dempster-Shafer theory, the explanations from the RBE and ML models 120, 110 can be combined to provide a comprehensive representation of uncertainty in the explanations.

The RBE model 120 further comprises an optional alarm segregation module 122. The segregation module 122 segregates alarms into two categories: IT (Information Technology) and OT (Operational Technology). The segregation may be achieved by using point groupings, which may help reduce explainability issues caused by communication disturbances in IT devices.

Information Technology may include one or more of the following: computer systems, data storage, and networking infrastructure and processes used to create, process, store, secure, and exchange all forms of electronic data. These data processing systems serve as repositories of information, making data readily available.

On the other hand, operational Technology pertains to industrial operation outcomes and may include events of the processes and the physical devices/assets used during operations. Data from OT equipment/assets may be continuously collected for data-driven analysis. As more OT equipment data is analyzed, predictive maintenance becomes more feasible, thereby reducing unplanned downtime.

The rules in the RBE model 120 may be derived from the SCADA system 100. These rules may, e.g., be formulated based on the SCADA program logic for configured alarms or events. By analyzing functional blocks in the code of the SCADA system 100, relevant parameters can be incorporated into the logic to ensure accurate rule derivation.

When a new alarm is received, the corresponding rule explanation is retrieved as the outcome. This process ensures that each alarm is addressed with the appropriate context and response strategy.

However, some alarms may pertain to status representation and, therefore, may not have an explanation. Examples of such alarms include loss of communications, which may require physical validation of cables or other network disturbances. Thus, segregation of alarms into IT and OT categories may be useful when applying the rules. The explainability system 300 can hence also helps in identifying and resolving communication disturbances in IT devices.

The ML model 110 in Fig. 5 benefits form the discussion of the ML model 110 described in relation to Fig. 4. However, in Fig. 5, the ML model outputs the generated technical explanation to the validation module 130.

It is appreciated that the explainability system 300 may be integrated with an existing SCADA system 100, e.g., via an interface. For example, the existing SCADA system may be able to receive alarm triggers or user requests for explanations, and/or query the ML model 110 of the explainability system 300 to retrieve explanations for specific alarms or events.

Further, as depicted in Fig. 5, the technical explanations may be presented to an operator 10 of the SCADA system 100 via an "enhanced view of alarms", e.g., a human-machine interface. For example, explanations to the operator 10 may be presented via a pop-up window and/or dedicated explanation panels within an operator screen. Alternatively, an existing alarm window of the SCADA system may be utilized. However, any suitable means for presenting the technical explanations may be used or implemented.

Moreover, in a non-limiting example, actual visualizations of the generated technical explanations may comprise any one or more of: highlighting relevant sensor readings on trend graphs, visualizing correlations between features, and using decision trees to depict reasoning processes.

Operators 10 may further, for example, be able to filter the explanation information displayed, or request explanations for specific time indices or in specific timeframes.

In the above the inventive concept has mainly been described with reference to a limited number of examples. However, as is readily appreciated by a person skilled in the art, other examples than the ones disclosed above are equally possible within the scope of the inventive concept, as defined by the appended claims.

In the claims, the word "comprising" does not exclude other elements or steps, and the indefinite article "a" or "an" does not exclude a plurality. A single processor or other unit may fulfil the functions of several items recited in the claims. The mere fact that certain features are recited in mutually different dependent claims does not indicate that a combination of these features cannot be used to advantage. Any reference signs in the claims should not be construed as limiting the scope.

**Claims**

1. A computer-implemented method (1000) for generating technical explanations of alarms in a supervisory control and data acquisition, SCADA, system for an electrical infrastructure, the method (1000) comprising:

   providing (1100) a neural network, NN, model trained to detect anomalies in data, wherein the NN model is trained on a training dataset comprising training data based on operational data retrieved by the SCADA system from the electrical infrastructure and comprising data related to a plurality of system parameters of the SCADA system, receiving (1200) run data based on operational data retrieved by the SCADA system from the electrical infrastructure, the run data comprising data related to the plurality of system parameters, detecting (1300), with the NN model, an anomaly in the run data, and generating (1400) a technical explanation of the detected anomaly by means of an interpretability model, wherein the interpretability model applies a model-agnostic interpretable technique to the run data to determine a contribution of the system parameters in the plurality of system parameters to the detection of the anomaly, wherein the NN model and the interpretability model together form a machine learning, ML, model, and wherein the NN model is trained on the training dataset by:

   encoding (2100) the training data of the training dataset into a compressed representation, decoding (2200) the compressed representation into reconstructed data, and minimizing (2300) a reconstruction error between the training data and the reconstructed data, wherein the NN model comprises a plurality of nodes and layers, wherein each subsequent layer of the NN model progressively processes the training data to identify and represent relationships within the training data, and, thus, between the system parameters to which the training data is related.

2. The computer-implemented method according to claim 1, wherein the model-agnostic interpretable technique utilizes Shapley additive explanation, SHAP, values to determine the contribution of the system parameters in the run data to the detection of the anomaly.

3. The computer-implemented method according to claim 1 or 2, wherein the run data retrieved by the SCADA system is real-time data, and wherein the NN model is trained on training data retrieved by the SCADA system during a time interval that is separate from the retrieval of the real-time data.

4. The computer-implemented method according to any one of the preceding claims comprising providing the training data by preprocessing the operational data.

5. The computer-implemented method according to claim 4, wherein said preprocessing of the operational data comprises at least one of:

   excluding data collected during periods when at least a part of the SCADA system is on a scheduled maintenance plan or site tests are being carried out, removing records that contain non-numeric values, NaN, applying a backfill approach to fill in missing data, downscaling raw data, and preprocessing data according to rules based on a subsystem within the SCADA system.

6. The computer-implemented method according to any one of the preceding claims, wherein the interpretability model is trained on labeled data.

7. The computer-implemented method according to claim 6, wherein the labeled data is labeled, by a self-supervised model, based on patterns from unlabeled data.

8. The computer-implemented method according to any one of the preceding claims, further comprising, via an incremental learning model:

   monitoring the run data for a data drift in the run data, and upon detecting a data drift in the run data, updating the NN model to adapt to behaviors of the run data caused by the data drift.

9. The computer-implemented method according to any one of the preceding claims, further comprising:

   providing a rule-based explanations, RBE, model, wherein the RBE model comprises rule-based explanations derived from a preprogrammed code within the SCADA system, the preprogramed code defining relationships between the run data retrieved by the SCADA system and alarms in the SCADA system,
   detecting, with the RBE model, an anomaly in the run data retrieved by the SCADA system,
   generating, based on an output from the RBE model, a technical explanation of the anomaly,
   providing a validation module for cross-verification, and
   cross-validating, with the validation module, the technical explanation from the RBE model and the technical explanation from the ML model.

10. The computer-implemented method according to claim 9, wherein the validation module is a decision-making merge node.

11. The computer-implemented method according to any one of the preceding claims, wherein the ML model represents a first ML model, wherein the method further comprises providing a second ML model, wherein the first ML model generates technical explanations of anomalies in numeric data from the SCADA system, and wherein the second ML model generates technical explanations of anomalies in statuses of communication devices in the SCADA system.

12. A non-transitory computer-readable medium storing instructions thereon which, when executed by a processor, cause the processor to carry out the steps of the method (1000) according to claim 1.

13. An explainability system (300) configured to detect and provide technical explanations of anomalies in data retrieved by a supervisory control and data acquisition, SCADA, system (100), the explainability system (300) comprising:

   a neural network, NN, model (112) trained to detect anomalies in data, wherein the NN model (112) is trained on a training dataset comprising training data based on operational data retrieved by the SCADA system (100), and
   an interpretability model (114) configured to apply a model-agnostic interpretable technique to the data to determine a contribution of a plurality of SCADA system parameters in the data to a detection of an anomaly detected by the NN model (112), and configured to, based on the determined contribution, output a technical explanation of the anomaly,
   wherein the NN model (112) and the interpretability model (114) together form a machine learning, ML, model (110), and
   wherein the NN model (112) is trained on the training dataset by:

      encoding the training data of the training dataset into a compressed representation,
      decoding the compressed representation into reconstructed data, and
      minimizing a reconstruction error between the training data and the reconstructed data,
      wherein the NN model (112) comprises a plurality of nodes and layers, wherein each subsequent layer of the NN model (112) progressively processes the training data to identify and represent relationships within the training data and, thus, between SCADA system parameters to which the training data is related.

14. The explainability system according to claim 14, further comprising:

   a rule-based explanations, RBE, model comprising rule-based explanations derived from a preprogrammed code, the preprogramed code defining relationships between the data retrieved by the SCADA system and alarms in the SCADA system, wherein the RBE model is configured to output a technical explanation of the anomaly based on the rule-based explanations, and
   a validation module for cross-verification of the technical explanation from the RBE model and the technical explanation from the ML model.

1000

```
┌─────────────────────────────────────────┐
│   Providing a neural network, NN, model  │
│   trained to detect anomalies in data,   │
│   wherein the NN model is trained on a    │        1100
│   training dataset comprising training    │
│   data based on operational data          │
│   retrieved by a SCADA system from an     │
│   electrical infrastructure and           │
│   comprising data related to a plurality  │
│   of system parameters of the SCADA       │
│   system                                  │
└─────────────────────────────────────────┘
                    │
                    ▼
┌─────────────────────────────────────────┐
│   Receiving run data based on operational │
│   data retrieved by the SCADA system from │        1200
│   the electrical infrastructure, the run  │
│   data comprising data related to the     │
│   plurality of system parameters          │
└─────────────────────────────────────────┘
                    │
                    ▼
┌─────────────────────────────────────────┐
│   Detecting, with the NN model, an        │        1300
│   anomaly in the run data                 │
└─────────────────────────────────────────┘
                    │
                    ▼
┌─────────────────────────────────────────┐
│   Generating a technical explanation of   │        1400
│   the detected anomaly by means of an     │
│   interpretability model                  │
└─────────────────────────────────────────┘
```

*Figure 1A*

2000

| Encoding training data of a training dataset into a compressed representation | 2100 |
| Decoding the compressed representation into reconstructed data | 2200 |
| Minimizing a reconstruction error between the training data and the reconstructed data | 2300 |

*Figure 1B*

Figure 2

*Figure 3A*

*Figure 3B*

Figure 4

EP 4 783 068 A1

*Figure 5*

**EUROPEAN SEARCH REPORT**

Application Number

EP 25 15 3760

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NAIDU SARALA M ET AL: "XES3MaP: Explainable Risks Identified from Ensembled Stacked Self-Supervised Models to Augment Predictive Maintenance", 2024 IEEE CONFERENCE ON ARTIFICIAL INTELLIGENCE (CAI), IEEE, 25 June 2024 (2024-06-25), pages 1542-1548, XP034656324, DOI: 10.1109/CAI59869.2024.00280 [retrieved on 2024-07-30] * abstract * * page 1542, left-hand column, line 1 - page 1547, right-hand column, line 25 * | 1-14 | INV. G06N3/0455 G06N5/045 G06N20/20 ADD. G05B23/02 |
| A | NWAKANMA COSMAS IFEANYI ET AL: "Explainable SCADA-Edge Network Intrusion Detection System: Tree-LIME Approach", 2023 IEEE INTERNATIONAL CONFERENCE ON COMMUNICATIONS, CONTROL, AND COMPUTING TECHNOLOGIES FOR SMART GRIDS (SMARTGRIDCOMM), IEEE, 31 October 2023 (2023-10-31), pages 1-7, XP034483585, DOI: 10.1109/SMARTGRIDCOMM57358.2023.10333968 [retrieved on 2023-12-06] * abstract * * page 1, left-hand column, line 1 - page 7, left-hand column, last line * | 1-14 | **TECHNICAL FIELDS SEARCHED (IPC)**<br><br>G06N |

The present search report has been drawn up for all claims

| Place of search | Date of completion of the search | Examiner |
|---|---|---|
| The Hague | 12 June 2025 | Totir, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)